Europäisches Patentamt

(19) European Patent Office

Office européen des brevets

(11) Numéro de publication : **0 306 387 B1**

(12) **FASCICULE DE BREVET EUROPEEN**

(45) Date de publication du fascicule du brevet :
27.11.91 Bulletin 91/48

(21) Numéro de dépôt : **88402107.2**

(22) Date de dépôt : **12.08.88**

(51) Int. Cl.⁵ : **B23K 9/02, H02G 11/02, B23K 9/10, B23K 37/02**

(54) **Dispositif de stockage et de manutention d'au moins un élément souple allongé tel qu'un câble d'alimentation et de transmission de signaux, pour une machine de soudage orbital automatique.**

(30) Priorité : **04.09.87 FR 8712322**

(43) Date de publication de la demande :
**08.03.89 Bulletin 89/10**

(45) Mention de la délivrance du brevet :
**27.11.91 Bulletin 91/48**

(84) Etats contractants désignés :
**BE CH DE ES GB LI**

(56) Documents cités :
**DE-A- 1 296 489**
**DE-U- 8 525 737**
**US-A- 3 088 018**

(56) Documents cités :
**US-A- 3 207 881**
**US-A- 3 678 239**
**US-A- 3 743 812**
**US-A- 3 990 551**

(73) Titulaire : **FRAMATOME**
**Tour Fiat 1, Place de la Coupole**
**F-92400 Courbevoie (FR)**

(72) Inventeur : **Gente, Daniel**
**10 Rue Chanfort**
**F-69100 Villeurbanne (FR)**

(74) Mandataire : **Bouget, Lucien et al**
**Cabinet Lavoix 2, Place d'Estienne d'Orves**
**F-75441 Paris Cédex 09 (FR)**

## Description

L'invention conceme un dispositif de soudage orbital de pièces de grandes dimensions symétriques de révolution.

On connaît des machines de soudage automatiques qui sont utilisées pour le soudage orbital de pièces de grandes dimensions ayant une symétrie de révolution, telles que des tuyauteries.

Pour prolonger la durée de vie des réacteurs nucléaires à eau sous pression, on a envisagé d'effectuer le changement complet des générateurs de vapeur qui subissent en service une usure due à la corrosion par l'eau primaire et par l'eau d'alimentation. Les générateurs de vapeur sont raccordés aux canalisations primaires, au niveau de leurs boîtes à eau et après mise en place d'un générateur neuf de remplacement, il est nécessaire d'effectuer le soudage bout à bout des canalisations primaires et des tubulures de raccordement de la boîte à eau. Ces opérations sont effectuées sur le circuit primaire d'un réacteur nucléaire ayant déjà fonctionné et donc dans un environnement fortement radio-actif. Il est donc nécessaire d'utiliser une machine de soudage automatique commandée à distance pour effectuer les soudures de raccordement du générateur de vapeur de remplacement. On utilise généralement, pour cette opération, une machine de soudage TIG orbital commandée à distance, l'ensemble de l'opération de soudage étant assisté par ordinateur. Le poste de commande est la plupart du temps très éloigné de la zone dans laquelle on réalise le soudage et diverses liaisons entre la machine de soudage et le poste de commande sont nécessaires, par exemple, pour commander, contrôler et visualiser l'opération de soudage.

La machine de soudage orbital comporte une tête se déplaçant sur un rail placé autour de la tuyauterie et de la tubulure à joindre par soudage. La tête de soudage doit être reliée au poste de commande par un ensemble de câbles d'alimentation et de transmission de signaux, permettant de fournir le courant électrique nécessaire pour réaliser le soudage, de régler les différents paramètres de soudage et de commander les déplacements de l'électrode. Les câbles d'alimentation et de transmission de signaux sont encombrants et pesants et doivent suivre le mouvement orbital de la tête de soudage, sans pour autant entraîner des perturbations du soudage en cours. En conséquence, les câbles sont généralement installés dans deux tubes souples de gros diamètres appelés ombilicaux pour pouvoir réaliser le guidage et la manutention groupée des divers câbles reliés à la tête de soudage.

On connaît, par le US-A-3.207.881, une machine de soudage de tuyauteries comportant au moins deux têtes de soudage fixées sur des couronnes dentées et montées mobiles en rotation sur un support entourant les tuyauteries. La disposition des câbles d'alimentation des têtes de soudage ne permet pas d'assurer un guidage et un déplacement des câbles totalement satisfaisant.

On connaît, par le US-A-30990.551, un dispositif de stockage d'un câble monté sur un véhicule permettant d'entraîner le câble qui est relié à une source d'énergie électrique fixe, à une vitesse égale à la vitesse de déplacement du véhicule. L'utilisation d'un tel dispositif pour assurer la manutention d'un câble d'alimentation d'une machine de soudage n'est pas envisagée.

Jusqu'ici, on ne connaissait pas de dispositifs permettant de réaliser de façon optimale le guidage, le stockage et la manutention des câbles reliés à la tête de soudage d'une machine de soudage automatique.

Le but de l'invention est donc de proposer un dispositif de soudage orbital de pièces de grandes dimensions symétriques de révolution comportant un ensemble annulaire monté rotatif sur un rail de circulation disposé autour des pièces à souder et comprenant une tête de soudage motorisée, un poste de commande à distance, au moins un élément souple allongé d'alimentation de la tête de soudage et de transmission de signaux dont une extrémité est reliée à la tête de soudage et des moyens de stockage et de manutention de l'élément souple, le dispositif permettant d'assurer l'alimentation et la commande de la tête de soudage sans gêner l'opération de soudage orbital.

Dans ce but, le dispositif selon l'invention comporte :

— un bac de stockage de l'élément souple relié au poste de commande par au moins un câble de liaison et comprenant au moins un compartiment pour une longueur de réserve de l'élément souple dont une extrémité fixe opposée à l'extrémité reliée à la tête de soudage est solidaire du câble de liaison,

— des moyens de guidage de l'élément souple disposés entre la sortie du bac de stockage et la machine de soudage, constitués par des poulies, l'une au moins de ces poulies disposée à la sortie du bac de stockage étant motorisée et ayant une vitesse régulée, et par le fait que :

— l'ensemble annulaire monté mobile autour des pièces à souder dans un sens et dans l'autre comporte :

— un chariot maître motorisé monté mobile sur le rail de circulation et asservi aux déplacements de la tête de soudage,

— une pluralité de chariots reliés au chariot maître et constituant, avec la tête de soudage et le chariot maître, un ensemble de forme annulaire, mobile sur le rail de la tête de soudage,

— et une goulotte de réception de l'élément souple de forme annulaire fixée sur les chariots de l'ensemble annulaire.

Afin de bien faire comprendre l'invention, on va maintenant décrire, à titre d'exemple, en se référant aux figures jointes en annexe, un mode de réalisation d'un dispositif de soudage orbital utilisé dans le cadre d'un changement de générateur de vapeur.

La figure 1 est une vue en perspective de l'ensemble du dispositif de soudage et de ses éléments de commande.

La figure 2 est une vue d'ensemble en perspective du dispositif suivant l'invention.

La figure 3 est une vue partielle en perspective de l'ensemble annulaire monté mobile autour des pièces à souder du dispositif suivant l'invention représenté sur la figure 2.

La figure 4 est une vue en perspective de la tête de soudage et du chariot maître du dispositif de soudage.

La figure 5 est une vue du bac de stockage du dispositif suivant l'invention.

La figure 6 est une vue en perspective à plus grande échelle d'une poulie de renvoi du dispositif suivant l'invention.

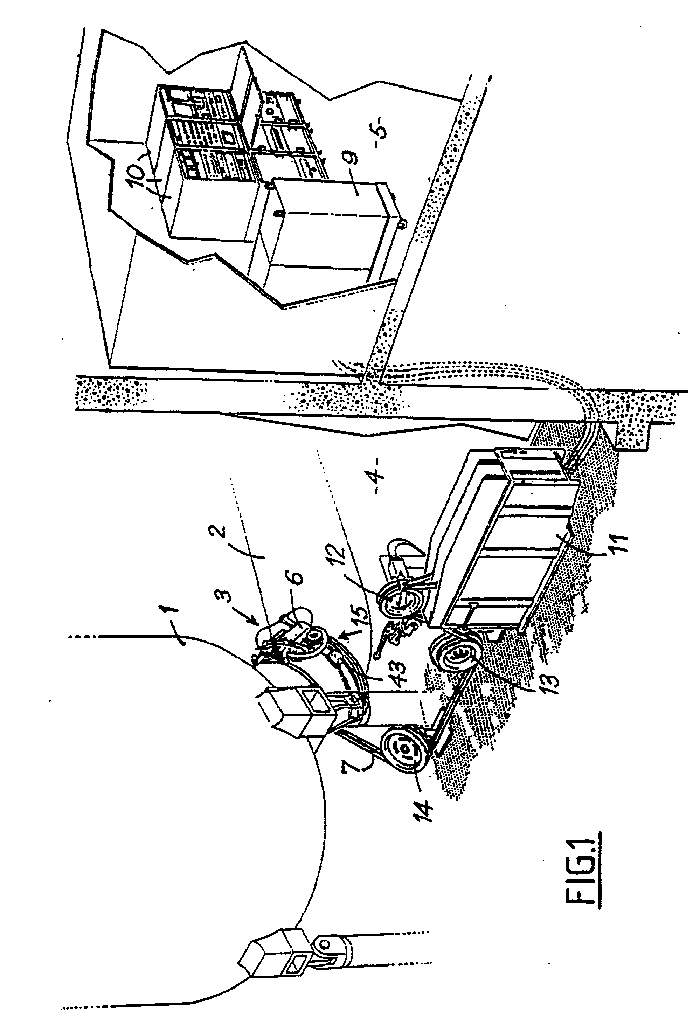

Sur la figure 1, on voit une partie 1 de la boîte à eau d'un générateur de vapeur d'un réacteur nucléaire à eau sous pression, en cours de raccordement à une tuyauterie 2 du circuit primaire. Le raccordement est effectué par soudage en utilisant une machine de soudage TIG orbital 3 en position de service dans la zone de jonction entre la canalisation 2 et une tubulure correspondante solidaire de la boîte à eau 1. La machine de soudage 3 est mise en oeuvre à l'intérieur de la casemate 4 dans laquelle le générateur de vapeur est mis en place, à l'intérieur de l'enceinte de sécurité du réacteur. L'opération de soudage est conduite depuis un poste de commande 5 éloigné de la casemate 4. La tête de soudage 6 de la machine 3 est alimentée et commandée par l'intermédiaire de câbles disposés à l'intérieur de deux tuyaux souples 7 appelés ombilicaux.

L'une des extrémités des ombilicaux 7 est fixée sur la tête de soudage et suit celle-ci dans ses déplacements autour de la zone de jonction entre la canalisation 2 et la tubulure correspondante de la boîte à eau 1.

Les câbles disposés à l'intérieur des tubes souples doivent être reliés à des armoires 9 et 10 disposées à l'intérieur du poste de commande 5, pour assurer l'alimentation en courant électrique et la commande de la machine de soudage 3.

Le dispositif de stockage et de manutention selon l'invention comporte un bac de stockage 11, des poulies 12, 13 et 14 de renvoi et/ou de manutention des ombilicaux 7 et un ensemble annulaire 15 disposé autour de la zone à souder et monté mobile sur le rail 16 de support et de guidage de la tête de soudage 6.

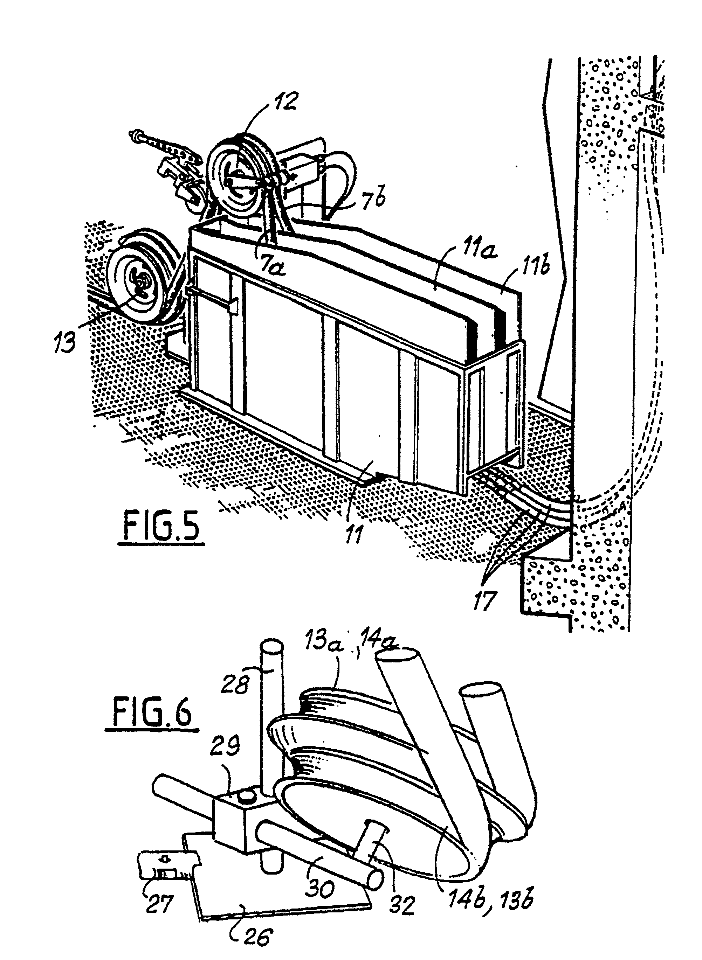

Sur les figures 1 et 5, on voit le bac de stockage 11 constitué par une structure dans laquelle sont délimités deux compartiments 11a et 11b de forme allongée et de faible largeur. Chacun des compartiments 11a et 11b présente une largeur très peu supérieure au diamètre des ombilicaux 7a et 7b dont une longueur de réserve est stockée dans le compartiment 11a et dans le compartiment 11b, respectivement. Pour leur stockage, les ombilicaux souples 7a et 7b sont disposés sur toute la longueur du bac de stockage 11 et constituent des plis successifs empilés les uns sur les autres. Les ombilicaux 7a et 7b comportent chacun une extrémité fixe disposée à la partie inférieure et à l'arrière du bac de stockage 11. Au niveau de ces extrémités fixes, les câbles disposés à l'intérieur des ombilicaux 7a et 7b sont reliés à des câbles de liaison 17 eux-mêmes reliés à leur autre extrémité aux armoires 9 et 10, à l'intérieur du poste de commande 5.

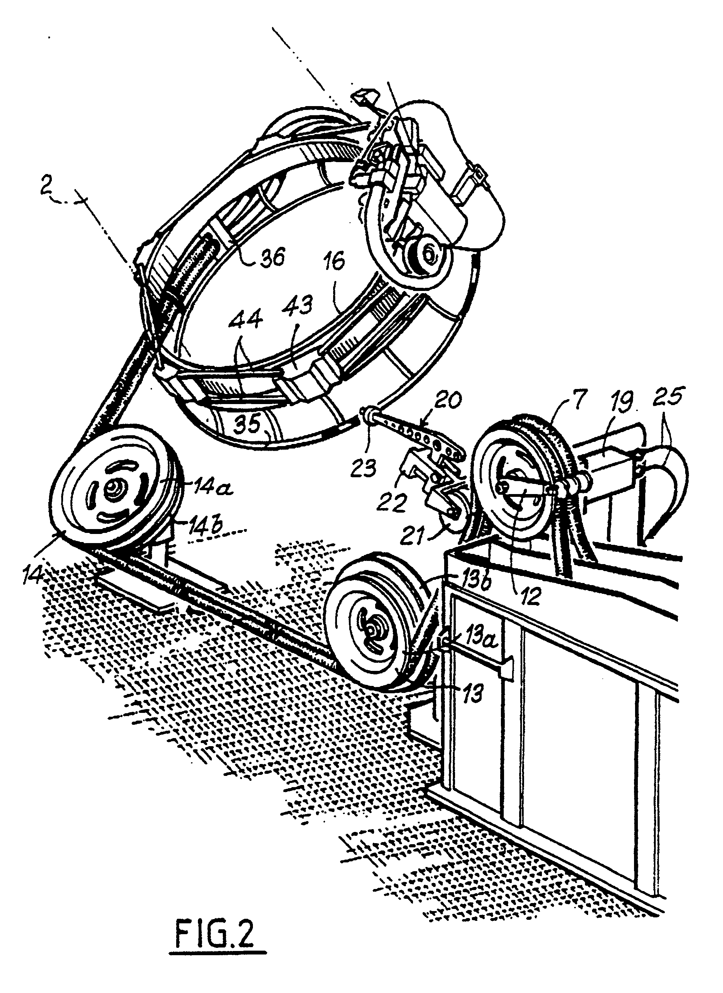

A la sortie du bac de stockage 11, les ombilicaux 7a et 7b sont pris en charge par les poulies motorisées 12, puis par les poulies de déflection 13 et 14 et enfin par l'ensemble annulaire rotatif 15 mobile autour de la zone de soudage. Ce dispositif de manutention des ombilicaux a été représenté sur la figure 2. Chacun des ensembles 12, 13 et 14 comporte deux poulies 12a-12b, 13a-13b, 14a-14b, l'une des poulies de chaque ensemble étant destinée à l'ombilical 7a et l'autre poulie à l'ombilical 7b. L'ensemble 12 est constitué de deux poulies de même diamètre 12a, 12b fixées sur un même axe relié à l'axe de sortie d'un moteur d'entraînement 19. Le bac de stockage 11 renferme une longueur de réserve des ombilicaux 7. La rotation du moteur 19 dans un sens permet d'extraire les ombilicaux du bac 11 alors que la rotation de ce moteur 19 dans l'autre sens permet de reconstituer la réserve dans le bac 11.

Un dispositif de régulation 20 est associé au moteur 19 et permet de régler la vitesse de ce moteur en fonction des besoins du dispositif de manutention des ombilicaux.

Le dispositif 20 fonctionne comme un tensiomètre et comporte deux poulies 21 en contact chacune avec l'un des ombilicaux. Les poulies 21 sont montées rotatives sur une glissière 22 montée coulissante dans un support solidaire d'un bras horizontal monté sur la structure du bac 11. Les poulies 21 sont maintenues en contact avec les ombilicaux 7, par un contrepoids 23 disposé à l'extrémité d'un levier articulé sur le support et appuyant sur la glissière 22. Un capteur d'angle non représenté est également monté sur le support et relié par des conducteurs 25 à un circuit de réglage de la vitesse du moteur 19.

Le déplacement linéaire de la glissière 22, qui est transmis par l'intermédiaire d'une crémaillère à la roue du capteur dépend en effet de la tension des ombilicaux 7, à la sortie de l'ensemble d'entraînement 12 constitué par les poulies motorisées 12a et 12b.

Si la tension des ombilicaux 7 est faible, le déplacement linéaire de la glissière 22 s'effectue du haut vers le bas. Le capteur transmet un signal déterminant un ralentissement du moteur 19 ou, selon l'amplitude du signal, commande l'inversion du sens de rotation pour enrouler les ombilicaux.

Au contraire, si la tension des ombilicaux 7 est forte, le déplacement linéaire de la glissière 22 s'effectue du bas vers le haut, le capteur envoie alors un signal permettant d'augmenter la vitesse des poulies de l'ensemble 12 et donc d'augmenter la vitesse de sortie de la réserve de longueur des ombilicaux contenue dans le bac 11.

Les ensembles de poulies 13 et 14 sont des ensembles de renvoi des ombilicaux 7 et comportent chacun deux poulies montées folles sur un axe incliné. Les deux poulies sont de diamètres différents pour faciliter le passage des ombilicaux et pour conserver aux ombilicaux la même longueur développée dans le cas d'un renvoi angulaire vers le bac de stockage 11 ; le rattrapage de longueur est effectué sur les deux ensembles successifs 13 et 14.

La structure générale des ensembles 13 et 14 est identique, cette disposition étant représentée sur la figure 6. Chacun des ensembles 13 et 14 comporte un support plat 26 fixé sur le plancher de la casemate 4 par des étriers 27. Le support 26 porte un axe vertical 28 sur lequel est monté coulissant un bloc support parallélépipèdique 29 dans lequel glisse un axe horizontal 30. L'axe 30 porte, à son extrémité, un arbre 32 sur lequel les poulies 13a et 13b, ou 14a et 14b, sont montées folles.

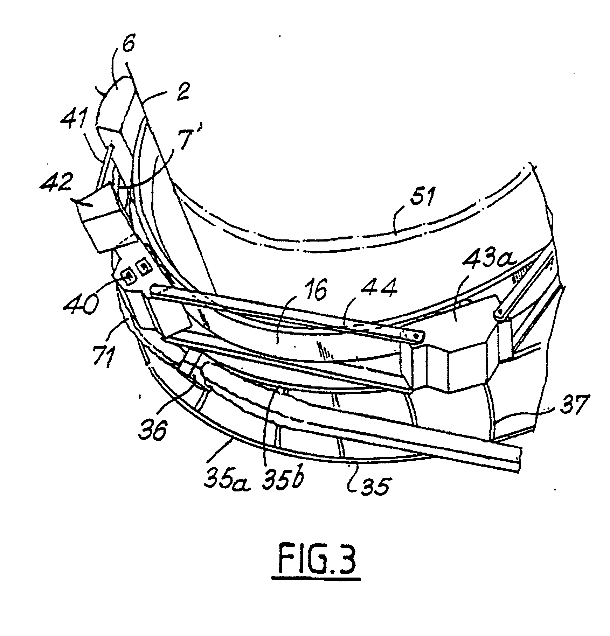

Comme il est visible sur les figures 2 et 3, l'ensemble annulaire 15 monté mobile en rotation autour de la zone de jonction dans laquelle on réalise le soudage comporte une goulotte de réception et de support 35 des ombilicaux 7 qui sont fixés sur cette goulotte 35, par l'intermédiaire d'une bride de fixation 36. Les ombilicaux 7 comportent une partie d'extrémité entre la bride de fixation 36 et la tête de soudage 6, formant une boucle susceptible d'absorber des écarts de faible amplitude entre la tête de soudage et l'ensemble mobile, ce qui permet un débattement sans contrainte mécanique de la tête de soudage par rapport au chariot motorisé pendant leurs déplacements en rotation sur le rail 16 de la machine de soudage.

La goulotte 35 est constituée sous la forme d'une structure légère en tubes d'acier inoxydable comportant deux anneaux 35a et 35b reliés entre eux par des portions de tube incurvées 37 constituant un berceau annulaire de réception et d'enroulement des ombilicaux 7. Chaque anneau 35a et 35b est constitué de deux demi-anneaux avec un système d'attache à genouillère pour leur assemblage.

Le dispositif 15 comporte également un ensemble articulé de forme globalement annulaire constitué par des chariots mobiles sur le rail 16 de la tête de soudage 6 et reliés entre eux par des barres articulées. Cet ensemble comporte un chariot motorisé 40 asservi aux déplacements de la tête de soudage 6, par l'intermédiaire d'une biellette de liaison 41 et d'un capteur d'angle 42. L'ensemble annulaire articulé est complété par quatre chariots non motorisés 43 dont l'un, ou premier chariot, 43a est relié au chariot motorisé 40 puis un autre ou deuxième chariot 43b au premier et ainsi de suite jusqu'au dernier. Les chariots 43 sont régulièrement espacés suivant la circonférence du rail 16 sur lequel ils se déplacent et sont reliés entre eux et au chariot motorisé 40 par des ensembles de deux barres articulées 44 situées de part et d'autre du rail 16.

L'ensemble annulaire articulé est donc réalisé sous forme caténaire, ce qui lui permet de s'adapter à la forme du rail 16. La goulotte 35 est fixée sur chacun des cinq chariots 40 et 43 constituant l'ensemble articulé. Le montage de cet ensemble peut être réalisé de façon simple, ces divers éléments comportant des moyens d'assemblage amovibles.

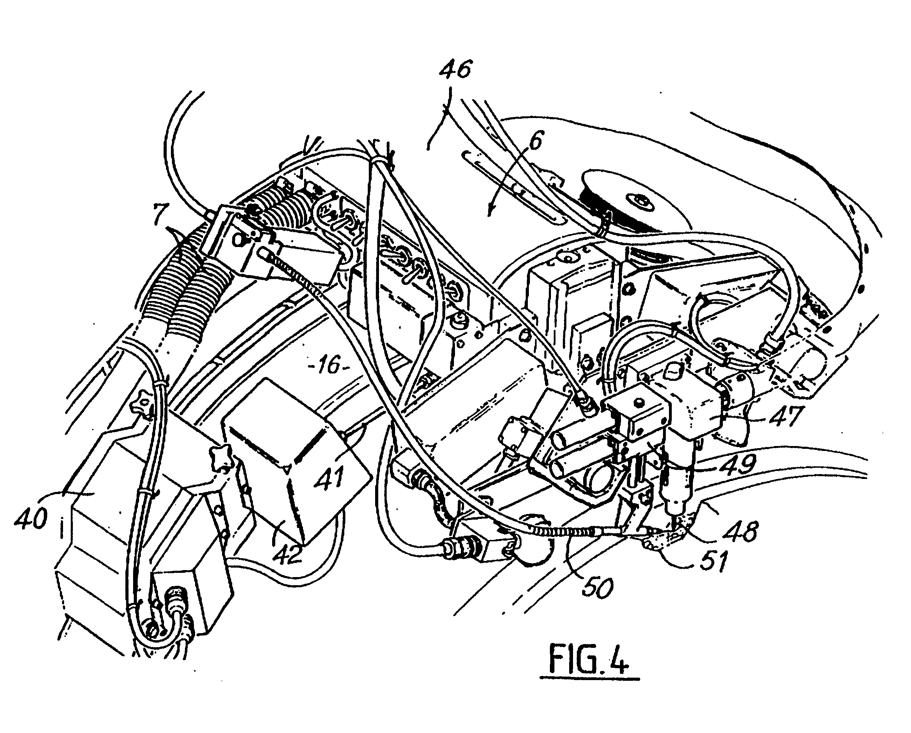

Comme il est visible sur la figure 4, la machine de soudage 6 comporte un chariot 46 sur lequel est fixée la tête de soudage proprement dite 47 portant l'électrode 48. Le chariot 46 se déplace sur le rail 16 et constitue une partie de l'ensemble articulé annulaire de type caténaire assurant le déplacement des ombilicaux 7 de la manière qui sera décrite plus bas.

La machine de soudage comporte également des moyens de visualisation 49 de la zone de soudage, un moyen 50 d'amenée du fil d'apport au voisinage de l'électrode, dans le chanfrein de soudage 51 ainsi que des moyens pour assurer le balayage de la zone de soudage par du gaz inerte.

Comme il a été indiqué plus haut, le chariot motorisé 40 est relié au chariot 46 de la tête de soudage par une biellette 41 articulée à l'une de ses extrémités sur le chariot 46 et à son autre extrémité sur la partie mobile d'un capteur d'angle disposé dans un ensemble de commande 42 du chariot 40. Lorsque la tête de soudage se déplace grâce au chariot 46 autour du chanfrein 51, la biellette 41 transmet une traction ou une poussée au capteur d'angle, suivant le sens de déplacement de la tête de soudage. Cette traction ou cette poussée qui dépend de l'accélération instantanée de la tête de soudage détermine l'alimentation du moteur du chariot 40 qui est régulée par un ensemble de commande électronique 10a (Fig. 1) en fonction des indications du capteur d'angle 42. On obtient ainsi une régulation de la vitesse du chariot 40 dont les déplacements sont totalement asservis aux déplacements du chariot 46 de la tête de soudage. Il est à remarquer que la liaison entre le chariot 46 et le chariot 40 est une liaison fonctionnelle par l'intermédiaire d'un capteur et non une liaison mécanique, si bien que l'entraînement du chariot 40 n'interfère en aucune manière avec le déplacement de la tête de soudage. Le chariot 40 entraîne à son tour l'ensemble des chariots 43 reliés par les barres d'espacement 44, la goulotte 35 et les ombilicaux 7 fixés au niveau de la bride 36 sur la goulotte 35. Cet entraînement de l'ensemble mobile en rotation autour de la zone de soudage détermine l'enroulement ou le déroulement des ombilicaux, sans que cet enroulement ou ce déroulement interfère avec le déplacement de la tête de soudage. Lors de l'enroulement, les ombilicaux viennent se loger dans la partie en creux de la goulotte 35 constituant un berceau de support.

Il est à remarquer que la goulotte 35 présente de par sa structure une certaine élasticité et une certaine souplesse permettant son adaptation, lors du déplacement des chariots sur le rail 16 de la tête de soudage.

Lors de l'enroulement ou du déroulement des ombilicaux 7 autour de la zone de soudage, à l'intérieur de la goulotte 35, une longueur équivalente à la longueur enroulée ou déroulée des ombilicaux 7 doit être prélevée ou au contraire redéposée dans le bac de stockage 11. Cette fonction est accomplie par l'ensemble à poulies motorisées 12 dont la rotation dans un sens ou dans l'autre à la vitesse voulue est commandée par le dispositif de commande 19 recevant un signal de commande provenant du capteur d'angle monté sur le support 23.

Les extrémités de liaison 17 des câbles contenus dans les ombilicaux 7 permettent non seulement l'alimentation et la commande de la tête de soudage mais encore l'alimentation et le réglage du dispositif de stockage et de manutention qui vient d'être décrit.

Pour cela, des câbles faisant partie de l'ensemble 17 sont reliés, à l'intérieur du poste de commande, à des coffrets électroniques recevant les informations des capteurs d'angle et fournissant en réponse le courant de commande des moteurs à des dispositifs de connections électriques.

A cet effet, le poste de commande comporte un coffret de puissance, un coffret d'asservissement télécommandé, une interconnection électrique, une connection pour les poulies motorisées 12, une connection pour le chariot motorisé 40 et enfin une connection de sécurité du soudage dont le fonctionnement sera décrit ci-dessous.

En cas d'incidents de parcours dans le mouvement des ombilicaux 7, une procédure d'évanouissement de l'arc est automatiquement lancée par la connection de sécurité du soudage. Le redémarrage de l'installation n'est possible qu'une fois la panne réparée.

Un ensemble de voyants lumineux permet de localiser rapidement le secteur déficient.

Le coffret d'asservissement télécommandé comporte deux voies, l'une destinée à la commande du chariot motorisé 40 et l'autre à l'ensemble de poulies d'entraînement 12 des ombilicaux 7.

A la fin d'une passe de soudage orbital, la tête de soudage 6 ayant effectué un tour complet autour du chanfrein 51, le mouvement orbital du chariot 46 est arrêté et le chariot est mis en marche dans le sens inverse. Le soudage peut être effectué éventuellement dans les deux sens de déplacement de la tête de soudage. Dans l'un des sens de déplacement, les ombilicaux 7 s'enroulent autour des pièces à souder et sont reçus à l'intérieur de la goulotte 35 et dans l'autre sens de déplacement, les ombilicaux 7 sont déroulés et sortent progressivement de la goulotte 35. Dans le premier cas, les ombilicaux 7 sont prélevés et d'autre l'autre cas, les ombilicaux 7 sont remis en place dans le bac de stockage 11.

Le dispositif suivant l'invention permet donc d'assurer la liaison entre une tête de soudage à déplacement orbital et un poste de commande éloigné de la zone de soudage, par l'intermédiaire d'au moins un élément souple, par exemple un ombilical renfermant des câbles, sans que cette liaison interfère avec le déplacement de la tête de soudage.

La goulotte de réception des câbles ou ombilicaux peut avoir une forme et une structure différentes de celle qui a été décrite. On peut utiliser un nombre plus grand ou plus faible de chariots reliés de manière articulée entre eux et à un chariot motorisé se déplaçant sur le rail de la machine de soudage. On peut également imaginer d'autres modes de liaison entre les chariots et utiliser éventuellement des chariots quine sont reliés que par l'intermédiaire de la goulotte de réception de l'élément souple.

Enfin, le dispositif suivant l'invention peut être utilisé dans des domaines différents du domaine nucléaire et dans le cas du soudage orbital commandé à distance de toute pièce symétrique de révolution de grandes dimensions.

## Revendications

1. Dispositif de soudage orbital de pièces de grandes dimensions symétriques de révolution comportant un ensemble annulaire (15) monté rotatif sur un rail de circulation (16) disposée autour des pièces à souder (2) et comprenant une tête de soudage (6) motorisée, un poste de commande (5) à distance, au moins un élément souple allongé (7) d'alimentation de la tête de soudage (6) et de transmission de signaux dont une extrémité est reliée à la tête de soudage (6) et des moyens de stockage et de manutention de l'élément souple (7), caractérisé par le fait qu'il comporte :

— un bac de stockage (11) de l'élément souple (7) relié au poste de commande (5) par au moins un câble de liaison (17) et comprenant au moins un compartiment (11a, 11b) pour une longueur de réserve de l'élément souple (7) dont une extrémité fixe opposée à l'extrémité reliée à la tête de soudage (6) est solidaire du câble de liaison (17),

— des moyens de guidage (12, 13, 14) de l'élément souple (7) disposés entre la sortie du bac de stockage (11) et la machine de soudage (6), constitués par des poulies (12a, 12b ; 13a, 13b ; 14a, 14b), l'une au moins de ces poulies disposée à la sortie du bac de stockage (11) étant motorisée et ayant une vitesse régulée, et par le fait que :

    — l'ensemble annulaire monté mobile autour des pièces à souder dans un sens et dans l'autre comporte :

       — un chariot maître (40) motorisé monté mobile sur le rail de circulation (16) et asservi aux déplacements de la tête de soudage,

       — une pluralité de chariots (43) reliés au chariot maître (40) et constituant, avec la tête de soudage (6) et le chariot maître (40), un ensemble de forme annulaire, mobile sur le rail (16) de la tête de soudage (6),

       — et une goulotte de réception (35) de l'élément souple (7) de forme annulaire fixée sur les chariots de l'ensemble annulaire (6, 40, 43).

2. Dispositif de soudage suivant la revendication 1, caractérisé par le fait que l'ensemble de forme annulaire constitué par les chariots est réalisé sous forme caténaire, les chariots (43) étant reliés entre eux et au chariot maître (40) par des barres d'espacement articulées (44).

3. Dispositif de soudage suivant la revendication 2, caractérisé par le fait que le chariot maître (40) disposé à proximité de la tête de soudage (6) est commandé par un ensemble de commande de déplacement (42) comportant un détecteur relié à la tête de soudage (6) par l'intermédiaire d'une biellette (21).

4. Dispositif de soudage suivant la revendication 3, caractérisé par le fait que le détecteur du dispositif de commande du chariot motorisé (40) est un détecteur d'angle.

5. Dispositif de soudage suivant l'une quelconque des revendications 1 à 4, caractérisé par le fait que la goulotte (35) est constituée par une structure en tubes comportant deux anneaux (35a, 35b) reliés par des entretoises incurvées (37) et constituant un berceau, la goulotte (35) étant reliée à chacun des chariots (40, 43) de l'ensemble annulaire.

6. Dispositif de soudage suivant l'une quelconque des revendications 1 à 5, caractérisé par le fait qu'il comporte un ensemble de poulies motorisées (12) disposé à la sortie du bac de stockage (11) dont la vitesse est commandée par un ensemble de commande (19, 20) comportant des poulies (21) montées folles sur une glissière (22) montée coulissante sur un support (23) monté sur le bac de stockage (11) et maintenues en contact avec l'élément souple (7) en défilement, par un contrepoids (24) et un capteur d'angle solidaire du support (23).

7. Dispositif de soudage suivant l'une quelconque des revendications 1 à 6, caractérisé par le fait qu'il comporte des moyens de guidage (13, 14) constitués par des poulies montées folles sur un axe réglable en position et en inclinaison.

8. Dispositif de soudage suivant l'une quelconque des revendications 1 à 7, dans le cas du soudage orbital d'une conduite primaire (2) sur une tubulure d'un générateur de vapeur (1) d'un réacteur nucléaire à eau sous pression, caractérisé par le fait que l'élément souple (7) est constitué par deux tubes souples (7a, 7b) renfermant les câbles d'alimentation et de transmission de signaux de la machine de soudage, dont une extrémité fixe (17) est reliée au poste de commande (5) éloigné de la zone de soudage.

9. Dispositif suivant la revendication 8, caractérisée par le fait que le bac de stockage comporte deux compartiments allongés (11a, 11b) disposés de façon adjacente et d'une largeur légèrement supérieure au diamètre des tubes souples (7a, 7b) pour recevoir chacun l'un des tubes souples (7a, 7b) appelés ombilicaux.

## Patentansprüche

1. Orbitalschweißvorrichtung für großdimensionierte rotationssymmetrische Teile, bestehend aus einer Ringkonstruktion (15), die auf eine um die zu schweißenden Teile (2) herum angeordnete Umlaufschiene (16) rotierend montiert ist, mit einem motorisch angetriebenen Schweißkopf (6), einem Fernbedienungsstand (5), mindestens einem langgestreckten flexiblen Element (7) für die Versorgung des Schweißkopfes (6) und die Signalübertragung, wobei eins der Enden an den Schweißkopf (6) angeschlossen ist, sowie einer Lagerungs- und Wartungsvorrichtung für das flexible Element (7), dadurch gekennzeichnet, daß sie aus folgenden Teilen besteht :

    — Lagerungsbehälter (11) für das flexible Element (7), angeschlossen an den Bedienungsstand (5) über mindestens ein Verbindungskabel (17), mit mindestens einer Kammer (11a, 11b) als Reserve für das flexible Element (7), wobei sein feststehendes Ende, im Gegensatz zu dem an den Schweißkopf (6) angeschlossenen Ende, fest mit dem Verbindungskabel (17) verbunden ist,

    — Führungssystem (12, 13, 14) für das flexible Element (7), angeordnet zwischen der Austrittsöffnung des Lagerungs-behälters (11) und dem Schweißgerät (6), in Form von Antriebsrollen (12a, 12b ; 13a, 13b ; 14a, 14b), wobei mindestens eine dieser an der Austrittsöffnung des Lagerungsbehälters (11) angeordneten Rollen über einen Motor angetrieben wird und über eine Geschwindigkeitsregulierung verfügt, weiterhin dadurch gekennzeichet, daß

— die um die zu schweißenden Teile in beliebiger Richtung rotierende Ringkonstruktion aus folgenden Elementen besteht :

    — motorisierter Hauptsupport (40), beweglich montiert auf die Umlaufschiene (16), mit automatischer Nachlaufregelung je nach Bewegung des Schweißkopfes,

    — mehrere Hilfssupporte (43), die mit dem Hauptsupport (40) verbunden sind und, zusammen mit dem Schweißkopf (6) und dem Hauptsupport (40), eine auf die Umlaufschiene (16) des Schweißkopfes beweglich montierte ringförmige Konstruktion ergeben.

    — eine Auslaufschurre (35) für das flexible Element (7), ringförmig, fest montiert auf die Supporte der Ringkonstruktion (6, 40, 43).

2. Schweißvorrichtung nach Anspruch 1, dadurch gekennzeichnet, daß die aus den Supporten bestehende Ringkonstruktion in Kettenform gebaut ist, wobei die Supporte (43) sowohl untereinander als auch mit dem Hauptsupport (40) durch Gelenkabstandstangen (44) verbunden sind.

3. Schweißvorrichtung nach Anspruch 2, dadurch gekennzeichnet, daß der in der Nähe des Schweißkopfes (6) angeordnete Hauptsupport (40) von einem Streckensteuerungssystem (42) angetrieben wird, das mit einem an den Schweißkopf (6) mit Hilfe eines Schwingarms (21) angeschlossenen Sensor versehen ist.

4. Schweißvorrichtung nach Anspruch 3, dadurch gekennzeichnet, daß der Sensor des Hauptsupportsteuerungssystems (40) ein Winkelstellungssensor ist.

5. Schweißvorrichtung nach einem der Ansprüche 1 bis 4, dadurch gekennzeichnet, daß die Auslaufschurre (35) aus einem Rohrsystem mit zwei Ringen besteht, die durch nach innen gebogene Querstreben (37) miteinander verbunden sind und auf diese Weise einen Sattel bilden, wobei die Auslaufschurre (35) an jeden der Supporte (40, 43) der Ringkonstruktion angeschlossen ist.

6. Schweißvorrichtung nach einem der Ansprüche 1 bis 5, dadurch gekennzeichnet, daß sie mit einem am Ausgang des Lagerungsbehälters (11) angeordneten und über einen Motor angetriebenen Rollensystem (12) mit Geschwindigkeitsreglern (19, 20) ausgestattet ist, bestehend aus Antriebsrollen, beweblich montiert auf eine Leitschiene (22), die wiederum gleitend auf eine Stützvorrichtung (23) montiert, dieselbe Stützvorrichtung (23) montiert auf den Lagerungsbehälter (11), wobei die Antriebsrollen mittels eines Gegengewichtes (24) und eines mit der Stützvorrichtung fest verbundenen Winkelstellungssensors (23) in ständigem Kontakt mit dem ablaufenden flexiblen Element bleiben.

7. Schweißvorrichtung nach einem der Ansprüche 1 bis 6, dadurch gekennzeichnet, daß sie mit einem Führungssystem (13, 14) ausgestattet ist, das aus auf eine positions- und neigungsverstellbare Achse montierten Antriebsrollen besteht.

8. Schweißvorrichtung nach einem der Ansprüche 1 bis 7, beim Orbitalschweißen einer Primärrohrleitung (2) auf einen Rohrstutzen eines Dampferzeugers (1) eines Druckwasser-Reaktors, dadurch gekennzeichnet, daß das flexible Element (7) aus zwei flexiblen Rohren (7a, 7b) besteht, die die Versorgungs- und Signalübertragungskabel des Schweißgeräts enthalten, wobei ein feststehendes Ende (17) an den vom Schweißbereich entfernt liegenden Fernbetätigungsstand (5) angeschlossen ist.

9. Vorrichtung nach Anspruch 8, dadurch gekennzeichnet, daß der Lagerungsbehälter aus zwei langgezogegen, nebeneinanderliegenden und im Verhältnis zum Außendurchmesser der flexiblen Rohre (7a, 7b) geringfügig breiteren Kammern (11a, 11b) besteht, zur Aufnahme jeweils eines der flexiblen Rohre (7a, 7b), die Nabelschnüre genannt werden.

**Claims**

1. A device for the orbital welding of rotationally symmetrical components of large size, having a ring-shaped assembly (15) rotatably mounted on a running rail (16) arranged around the components to be welded (2), and comprising a motorised welding head (6), a remote control station (5), at least one elongated flexible member (7) for supplying the welding head (6) and transmitting signals, one end of which is connected to the welding head (6), and storage and handling means for the flexible element (7), characterised in that it comprises :

    — a storage container (11) for the flexible element (7), connected to the control station (5) by means of at least one junction cable (17) and having at least one compartment (11a, 11b) for a reserve length of the flexible element (7), of which a stationary end opposite the end connected to the welding head (6) is fixedly connected to the junction cable (17),

    — guide means (12, 13, 14) for the flexible element (7), which are arranged between the outlet of the storage container (11) and the welding device (6) and which comprise pulleys (12a, 12b; 13a, 13b ; 14a, 14b), at least one of these pulleys arranged at the outlet of the storage container (11) being motorised and having a regulated speed, and that

    — a ring-shaped assembly mounted so as to be movable in both directions round the components to be welded comprises :

        — a motorised master carriage (40) movably mounted on the running rail (16) and subject to the movements of the welding head,

        — a plurality of carriages (43) connected to the master carriage (40) and forming, with the welding head (6) and the master carriage (40), a ring-shaped assembly movable on the rail (16) of the welding head (6),

— and a trough (35) for receiving the ring-shaped flexible element (7) which is mounted on the ring-shaped assembly (6, 40, 43).

2. A welding device according to Claim 1, characterised in that the ring-shaped assembly comprising the carriages is produced in catenary form, the carriages (43) being connected to one another and to the master carriage (40) by means of articulated spacer bars (44).

3. A welding device according to Claim 2, characterised in that the master carriage (40) located near the welding head (6) is controlled by means of a movement control assembly (42) having a detector connected to the welding head (6) by means of a connecting rod (21).

4. A welding device according to Claim 3, characterised in that the detector of the control device of the motorised carriage (40) is an angle detector.

5. A welding device according to any one of Claims 1 to 4, characterised in that the trough (35) consists of a structure of tubes comprising two hoops (35a, 35b) connected by means of curved struts (37) and forming a cradle, the trough (35) being connected to each of the carriages (40, 43) of the ring-shaped assembly.

6. A welding device according to any one of Claims 1 to 5 characterised in that it has an assembly of motorised pulleys (12) which is arranged at the outlet of the storage container (11) and the speed of which is controlled by means of a control assembly (19, 20) comprising pulleys (21) which are mounted loosely on a slide (22) mounted slidably on a support (23), said support being mounted on the storage container (11) and kept in contact with the moving flexible element (7) by means of a counterweight (24) and an angle sensor fixedly connected to the support (23).

7. A welding device according to any one of Claims 1 to 6, characterised in that it has guide means (13, 14) comprising pulleys mounted loosely on an axle adjustable in terms of position and inclination.

8. A welding device according to any one of Claims 1 to 7 for the orbital welding of a primary conduit (2) to a connection piece of a steam generator (1) of a pressurised-water nuclear reactor, characterised in that the flexible element (7) comprises two flexible tubes (7a, 7b) containing feeder and welding-device signal transmission cables, a stationary end (17) of which is connected to the control station (5) remote from the welding zone.

9. A device according to Claim 8, characterised in that the storage container comprises two elongated compartments (11a, 11b) arranged adjacent to one another and of a width slightly larger than the diameter of the flexible tubes (7a, 7b) in order each to receive one of the so-called umbilical flexible tubes (7a, 7b).

FIG.1

FIG.2

## FIG.3

FIG. 4

FIG.5

FIG.6